(19) Europäisches Patentamt

European Patent Office

Office européen des brevets

(11) **EP 1 158 502 B1**

(12) **EUROPEAN PATENT SPECIFICATION**

(45) Date of publication and mention of the grant of the patent:
**20.04.2005 Bulletin 2005/16**

(51) Int Cl.⁷: **G11B 7/135**

(21) Application number: **00311584.7**

(22) Date of filing: **21.12.2000**

(54) **Objective lens and optical pickup device adopting the same**

Objektivlinse und damit ausgerüstete optische Abtastvorrichtung

Lentille d'objectif et dispositif de lecture optique en faisant usage

(84) Designated Contracting States:
**DE FR GB NL**

(30) Priority: **17.04.2000 KR 2000020069**

(43) Date of publication of application:
**28.11.2001 Bulletin 2001/48**

(73) Proprietor: **SAMSUNG ELECTRONICS CO., LTD.**
**Suwon-City, Kyungki-do (KR)**

(72) Inventors:
 • **Chung, Chong-sam**
 **Seongnam-city, Kyungki-do (KR)**
 • **Kim, Tae-kyung**
 **Paldal-gu, Suwon-city, Kyungki-do (KR)**
 • **Ahn, Young-man**
 **Paldal-gu, Suwon-city, Kyungki-do (KR)**
 • **Seo, Hea-jung**
 **Seongnam-city, Kyungki-do (KR)**

(74) Representative: **Chugg, David John et al**
**Appleyard Lees,**
**15 Clare Road**
**Halifax, West Yorkshire HX1 2HY (GB)**

(56) References cited:
**EP-A- 0 790 605**    **EP-A- 1 043 615**
**US-A- 4 909 616**    **US-A- 5 173 809**
**US-A- 5 633 852**    **US-A- 5 644 437**

**Description**

The present invention relates to an objective lens device and an optical pickup device adopting the same, and more particularly, to an objective lens device which effectively compensates for chromatism generated at an objective lens due to a change in the output of a light source when a mode is shifted, and to an optical pickup device adopting the same.

As the storage capacity of optical storage devices increases, the quality of reproduced signals becomes more affected by reproduction conditions. In the case of an optical pickup adopting a blue laser light source using a short wavelength, the reproduced signal deteriorates due to chromatism generated from an objective lens.

In general, for glass and plastic used as a material for an objective lens of an optical pickup device, as a short wavelength of a light source decreases, the refractive index thereof increases. Also, the rate of change in the refractive index according to the change of wavelength increases so that the amount of chromatism generated corresponding to the amount of change in the wavelength increases. The objective lens used for an optical pickup device of an optical storage device is usually of an aspherical mono lens type formed of plastic or glass. In an optical pickup device adopting a blue laser light source of 400 nm, the deterioration of quality of a reproduced signal due to chromatism due to a change in the wavelength of a laser light source is unavoidable.

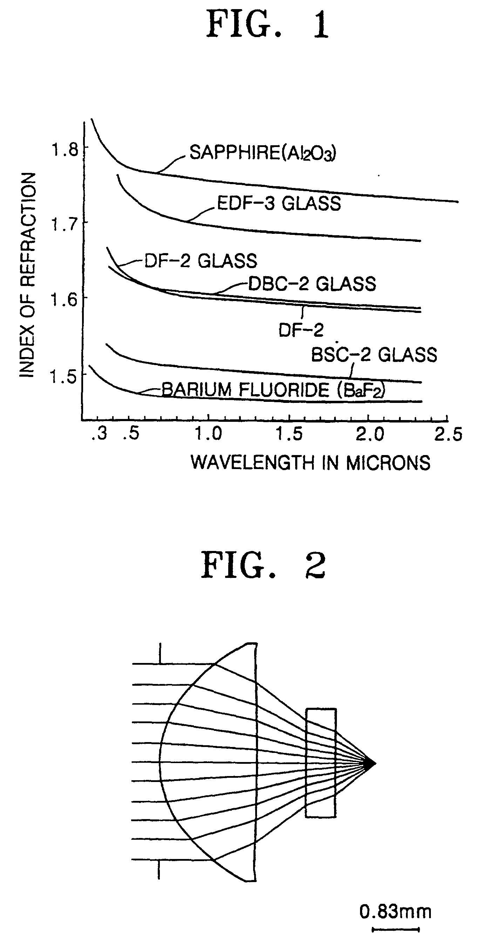

Figure 1 is a graph showing the change in the refractive index due to a change in the wavelength for each type of lens material. Referring to the drawing, it can be seen that, as the wavelength becomes shorter, the refractive index for each material changes rapidly. The change in the refractive index due to a change in the wavelength much affects the performance of an objective lens used for an optical storage device. Aberration due to a change in the oscillation wavelength of laser light changes the working distance between an objective lens and a disk so that the aberration due to the change in wavelength can be compensated for.

In the case of an optical storage device capable of reproduction and recording, the power of the laser light used for reproduction and recording varies. The change in power causes changes in wavelength of about ±2 nm with respect to a reference wavelength of laser light. Accordingly, chromatism due to the change in the wavelength is generated at an objective lens designed for the reference wavelength. Such chromatism can be compensated for by adjusting the working distance between the objective lens and the disk. Adjustment of the working distance is performed in a process in which a reproduced signal is made optimal by a focus servo mechanism. However, after chromatism is generated, since a duration on the order of about tens of microseconds is required for operating a circuit of the focus servo mechanism, the quality of a signal reproduced or recorded for the above time deteriorates.

Thus, in a reproducing and recording optical storage device, an objective lens is needed which can reduce or compensate for generation of chromatism when the wavelength of laser light changes in a range of at least ±2 nm due to a shift in mode.

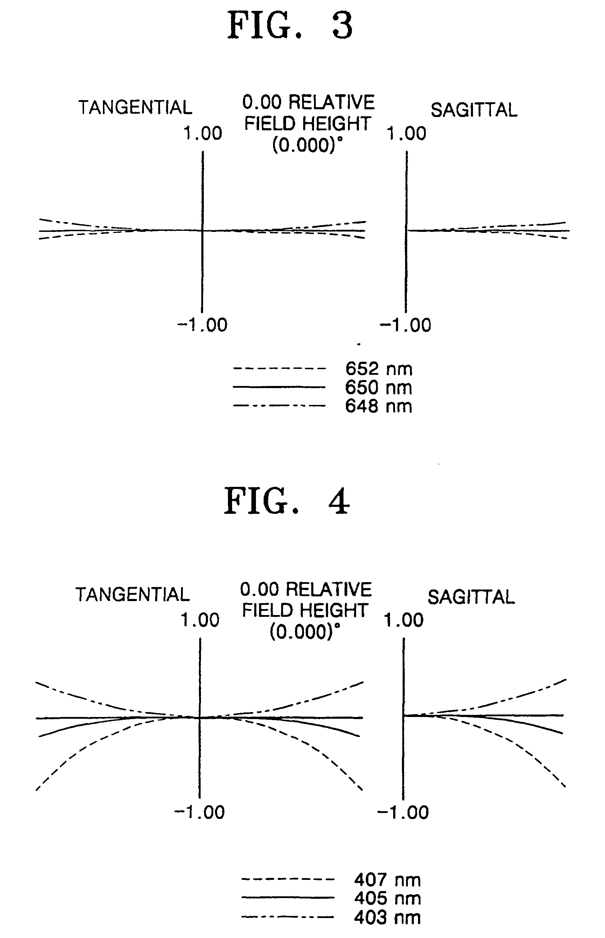

Figure 2 shows the structure of a single objective lens adopted to a conventional optical pickup device for an optical storage device. Figure 3 shows the property of chromatism for each of wavelengths of an objective lens in a state in which the working distance between the objective lens and the disk is fixed. Here, it is assumed that the objective lens is for a DVD (digital versatile disc) and has a structure having a reference wavelength of 650 nm and a NA (numerical aperture) of 0.6. As can be seen from Figure 3, even when the wavelength changes by ±2 nm with respect to the reference wavelength of 650 nm, since the RMS (root means square) chromatism is less than or equal to 0.04 $\lambda$ without adjustment of focus, no special problem is generated in the performance of the optical pickup device.

Table 1 shows data of each of surfaces of the disk and objective lens. Table 2 shows the amount of defocus and the wave front aberration for each wavelength.

[Table 1]

| Focal Distance | 3.32 mm | | |
|---|---|---|---|
| Surface Number | Curvature | Thickness | Material |
| 1 | 2.146 | 1.98 | BACD5 |
| | Conic Constant (K): -1 | | |
| | Aspherical Coefficient | | |
| | A: 0.693347E-2        B: 0.406563E-3 | | |
| | C: 0.36161E-4        D: -0.25357E-5 | | |
| 2 | -13.826 | 1.0 | |

[Table 1]   (continued)

| Focal Distance | 3.32 mm | | |
|---|---|---|---|
| Surface Number | Curvature | Thickness | Material |
| | Conic Constant(K): 0 | | |
| | Aspherical Coefficient | | |
| | A: 0.11646E-1          B: -0.21165E-2 | | |
| | C: 0.20695E-3          D: -0.72947E-5 | | |
| 3 | Infinity | 0.6 | Disc |
| 4 | Infinity | 0.089 | |
| 5 | Infinity | 0.0 | |

[Table 2]

| Wavelength (mm) | 652 | 650 | 648 |
|---|---|---|---|
| Defocus (µm) | 0.3 | 0.0 | -0.3 |
| Wave Front Aberration ($\lambda$) | 0.001 | 0.0004 | 0.0005 |

The amount of defocus in Table 2 is the amount of distance changed adjusted from the distance (3.32 mm) in Table 1 so that the distance between the objective lens and the disk is the minimum wave front aberration.

Figure 4 shows a property of chromatism for each wavelength with respect to an objective lens designed under the conditions of the wavelength being 405 nm and the NA being 0.6. As shown in the drawing, in a reference wavelength of 405 nm, a mere change of about ±2 nm increases the RMS wave front aberration over 0.1 $\lambda$. As a result, such wave front aberration shows that the objective lens cannot be applied to an optical pickup of an optical storage device. Data of each surface according to the above optical design is shown in Table 3 below. Table 4 shows the amount of defocus and wave front aberration for each wavelength.

[Table 3]

| Focal Distance | 3.32 mm | | |
|---|---|---|---|
| Surface Number | Curvature | Thickness | Material |
| 1 | 2.108 | 1.78 | BACD5 |
| | Conic Constant (K): -1.0 | | |
| | Aspherical Coefficient | | |
| | A: 0.70644E-2          B: 0.37055E-3 | | |
| | C: 0.65144E-4          D: -0.21579E-4 | | |
| 2 | -16.349 | 1.0 | |
| | Conic Constant(K): 0 | | |
| | Aspherical Coefficient | | |
| | A: 0.91856E-1          B: -0.16114E-2 | | |
| | C: 0.19349E-3          D: -0.16141E-5 | | |
| 3 | Infinity | 0.6 | Disc |
| 4 | Infinity | 0.813 | |
| 5 | Infinity | 0.0 | |

[Table 4]

| Wavelength (mm) | 407 | 405 | 403 |
|---|---|---|---|
| Defocus (µm) | 1.82 | 048 | -0.87 |
| Wave Front Aberration ($\lambda$) | 0.006 | 0.0025 | 0.0018 |

As a method for compensating for chromatism due to the change in wavelength as above, a conventional objective lens device which is made by assembling two aspherical lens element units formed of different materials into one has been widely used. However, it is difficult to manufacture an objective lens device by injection molding each of the two aspherical lens element units and combining the two units. In particular, when chromatism is to be corrected by using two aspherical lens units, a low-distribution lens having a positive power and a high-distribution lens having a negative power are manufactured respectively using flint-based glass and crown-based glass as materials. Then, the respective lenses are combined or coupled with a particular air gap. However, in the objective lens device, since the respective aspherical lens elements must have a distribution of over 30, the kinds of lens material to be injection molded are quite limited so that it is difficult to choose a material for each of the lens elements.

An example of a conventional optical pickup can be seen in European patent number EP 0 790 605. An objective lens is integrally formed with a hologram lens for correcting chromatic aberration. The focal length of the objective lens increases as a wavelength of laser light increases, and the focal length of the hologram lens decreases as the wavelength of laser light increases. The combined focal length remains constant, thereby removing chromatic aberation.

With a view to solve or reduce the above problems, it is an aim of embodiments of the present invention to provide an optical pickup device which can be easily manufactured and assembled and in which aberration due to a change in wavelength can be corrected.

It is another aim to provide an optical pickup device in which the material of a lens element for correcting aberration due to a change in wavelength can be easily chosen.

According to an aspect of the invention, there is provided anobjective lens device comprising: an aspherical lens element having a predetermined focal distance and a predetermined numerical aperture; a holographic lens including a diffraction lattice installed adjacent to the aspherical lens element; characterized in that: a focal distance of the holographic lens is longer than the focal distance of the aspherical lens element; and said diffraction lattice compensates for chromatism due to changes in wavelength of a laser light having a wavelength of 670 nm or less.

Preferably, the device is arranged, in use, to face a disk and the disk is one of a disk type including a DVD and an HD-DVD.

According to a second aspect of the invention, there is provided an optical pickup device comprising: a light source for generating laser light which proceeds toward a disk; an objective lens device including an aspherical lens element facing a disk having a predetermined focal distance and a predetermined numerical aperture, and a holographic lens including a diffraction lattice installed adjacent to the aspherical lens element; a beam splitter provided between the light source and the objective lens device; a photodetector for receiving light reflected by the disk and passing through the beam splitter; characterized in that: a focal distance of the holographic lens is longer than the focal distance of the aspherical lens element; and said diffraction lattice compensates for chromatism due to changes in wavelength of a laser light having a wavelength of 670 nm or less.

The disk may be any one of a disk type including a DVD and an HD-DVD.

Preferably, the light source emits laser light having a wavelength between and including 390 nm and 420 nm.

According to a third aspect, there is provided an optical pickup device comprising: first and second light sources for generating laser light having different wavelengths which proceed toward a disk selected from two different kinds of disks; an objective lens device including an aspherical lens element facing a disk having a predetermined focal distance and a predetermined numerical aperture, and a holographic lens including a diffraction lattice installed adjacent to the aspherical lens element; a first beam splitter provided between the first light source and the objective lens device for passing the laser light emitted from the first and second light sources, to proceed toward the disk; a second beam splitter provided between the first beam splitter and the first light source for passing the laser light emitted from the second light source to proceed toward the disk; photodetector for receiving light reflected by the disk and passing through the first beam splitter; characterized in that: a focal distance of the holographic lens is longer than the focal distance of the aspherical lens element; and said diffraction lattice compensates for chromatism due to changes in wavelength of a laser light having a wavelength of 670 nm or less.

Preferably, the different types of disks are a DVD and an HD-DVD.

Preferably, the first light source emits laser light having a wavelength between and including 390 nm and 420 nm and the second light source emits laser light having a wavelength between and including 630 nm and 670 nm.

The first light source may emit laser light having a wavelength of 405 nm and the second light source emit laser light having a wavelength of 650 nm.

Preferably, the aspherical lens element has positive power and the holographic lens element has positive or negative power.

For a better understanding of the invention, and to show how embodiments of the same may be carried into effect, reference will now be made, by way of example, to the accompanying diagrammatic drawings in which:

Figure 1 is a graph showing a change in the refractive index according to a change in wavelength for each of lens material generally used;

Figure 2 is a view showing the structure of a single objective lens applied to a conventional optical pickup device for an optical storage device;

Figure 3 is a graph showing the property of aberration for each wavelength of the objective lens in a state in which working distance between the conventional objective lens and the disk is fixed;

Figure 4 is a graph showing the property of aberration for each wavelength with respect to the conventional objective lens designed under the conditions of the wavelength being 405 nm and the NA being 0.6;

Figure 5 is a view showing the structure of an objective lens device according to a preferred embodiment of the present invention;

Figure 6 is a graph showing the property of aberration of the objective lens according to the embodiment shown in Figure 5;

Figure 7 is a diagram showing the structure of an optical pickup device according to a preferred embodiment of the present invention where the objective lens device of the present invention is applied;

Figure 8 is a diagram showing the structure of an optical pickup device according to another preferred embodiment of the present invention where the objective lens device of the present invention is applied;

Figure 9 is a graph showing the property of aberration when the working distance between the objective lens according to embodiments of the present invention and the disk is adjusted to be optimal for an HD-DVD; and

Figure 10 is a graph showing the property of aberration when the working distance between the objective lens according to embodiments of the present invention and the disk is adjusted to be optimal for aberration at a DVD.

In the present invention, an objective lens is constructed by one aspherical lens element and one holographic lens element. In an objective lens device according to embodiments of the present invention, the holographic lens element has a negative distribution of - 3.5 and the aspherical lens element is formed of glass material having a distribution of 60 such as BACD5 of HOYA, a Japanese lens manufacturing company.

The materials of these lens elements of the objective lens device can be easily selected and can effectively correct chromatism of laser light having a short wavelength of 670 nm or less, in particular around 400 nm.

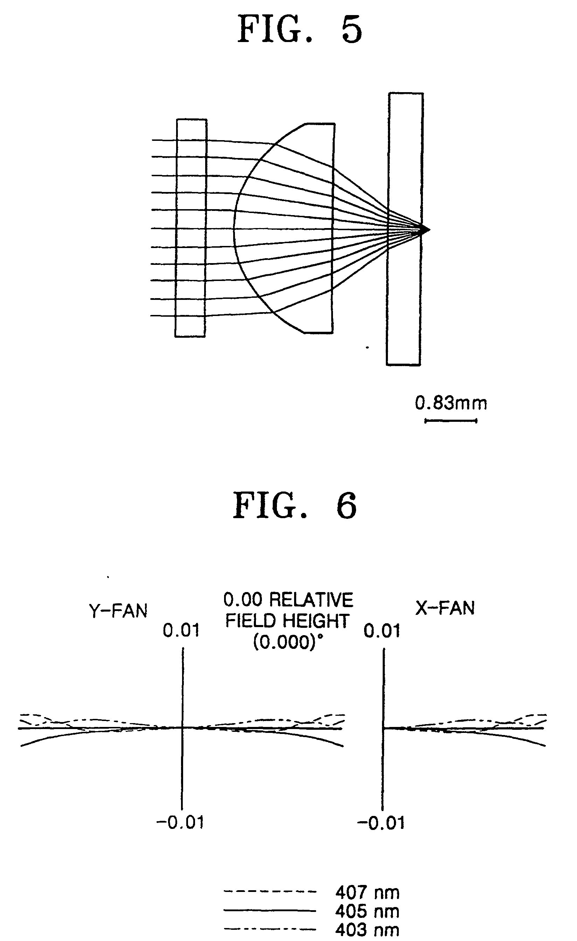

The optical data of each side of the respective optical parts and the holographic lens device in the present objective lens device shown in Figure 5 is indicated in the following Table 5. Figure 6 shows the property of aberration of the objective lens device adopting an aspherical lens element having a positive power and a holographic lens element having a positive or negative power. Table 5 is based on the optical design standard in which a reference wavelength $\lambda$ is 405 nm and NA is 0.6.

[Table 5]

| Focal Distance | Holographic Lens: 34.5 mm Aspherical Lens: 2.74 mm | | |
|---|---|---|---|
| Surface Number | Curvature | Thickness | Material |
| 1 | Infinity | 0.5 | BK7 |
| 2 | Infinity | 0.5 | |

[Table 5]   (continued)

| Focal Distance | Holographic Lens: 34.5 mm Aspherical Lens: 2.74 mm | | |
|---|---|---|---|
| Surface Number | Curvature | Thickness | Material |
| | Data of Holographic Lens<br>C3:-1.4493E-1    C5:-14493E-2 | | |
| 3 | 2.108 | 1.78 | BACD5 |
| | Conic Constant (K): -1.0<br>Aspherical Coefficient<br>A: 0.70644E-2    B: 0.37055E-3<br>C: 0.65114E-4    D: -0.21579E-4<br>E:0.59665E-5    F:-0.70753E-6 | | |
| 4 | -16.349 | 1.0 | |
| | Conic Constant (K): 0<br>Aspherical Coefficient<br>A: 0.91856E-1    B: -0.16114E-2<br>C: 0.19349E-3    D: -0.161417E-4 | | |
| 5 | Infinity | 0.6 | Disc |
| 6 | Infinity | 0.813 | |
| 7 | Infinity | 0.0 | |

Table 6 below indicates the amount of defocus and the surface aberration of the objective lens device according to Table 5.

[Table 6]

| Wavelength (nm) | 407 | 405 | 403 |
|---|---|---|---|
| Defocus ($\mu$m) | 0.02 | 0.0 | 0.16 |
| Wave Surface Aberration ($\lambda$) | 0.006 | 0.0025 | 0.008 |

The definition of the optical coefficient of the holographic lens device is expressed by Equation 1 in which the change in phase of a wave surface in a rectilinear coordinate system (X and Y) having the center of a holographic surface as the origin.

$$\phi(\ ) = \frac{2\pi}{\lambda} \sum_m \sum_n C_N X^m Y^n \qquad (1)$$

Here, N = 0.5 [(m+n)$^2$ + m + 3n].

The amount of defocus of the objective lens device should be within a range of focus depth (Fd) of the objective lens which is the amount of defocus allowed in optical storage devices.

When the objective lens device has a NA of 0.6 and a wavelength of 405 nm, the focal depth is 0.56 $\mu$m and, as shown in Table 6, a superior wave front aberration of less than 0.01 $\lambda$ with respect to a change in wavelength of $\pm$2 nm within the focal depth is obtained.

$$Fd = \frac{\lambda}{2NA^2} \qquad (2)$$

As described above, since the objective lens, that is, the objective lens device having one aspherical lens element and one holographic lens element has a wave front aberration of less than 0.01 λ with respect to a change in wavelength of ±2 nm, it is appropriate for an optical pickup device using laser light having a wavelength of about 400 nm.

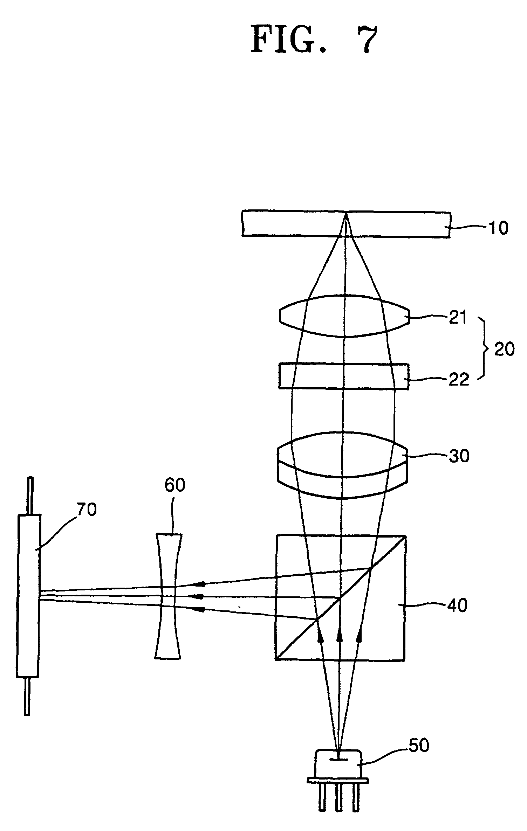

An optical pickup device adopting the objective lens device according to a preferred embodiment of the present invention is shown in Figure 7. Referring to the drawing, an objective lens device 20 according to the present invention is disposed close to a disk 10. A collimating lens 30 and a beam splitter 40 are disposed on the optical axis between the objective lens device 20 and a light source 50. A light receiving portion lens 60 and a photodetector 70 are disposed on the optical axis of light reflected by the beam splitter 40.

Here, the objective lens device 20 has an aspherical lens element 21, a holographic lens 22, and the optical structure as indicated in Table 5. The optical pickup device having the above structure may be for a disk type, for example, a DVD or a HD-DVD (high definition DVD) which is currently being developed. However, except for a special case, the optical pickup device may not be effective as an optical pickup device for a CD in which laser light having a wavelength of 780 nm is used.

The laser light for DVDs has a wavelength of 650 nm whereas the laser light for HD-DVDs has a relatively shorter wavelength of around 400 nm. Accordingly, the light source of the optical pickup device of the present invention generates laser light having a wavelength corresponding to the type of disk and optical properties of the beam splitter and the collimating lens should appropriately correspond to the above wavelength.

However, the objective lens device and the optical pickup device adopting the same are preferably applied for DVDs or HD-DVDs. Furthermore, the structures thereof are preferably designed to be compatible with both DVDs and HD-DVDs.

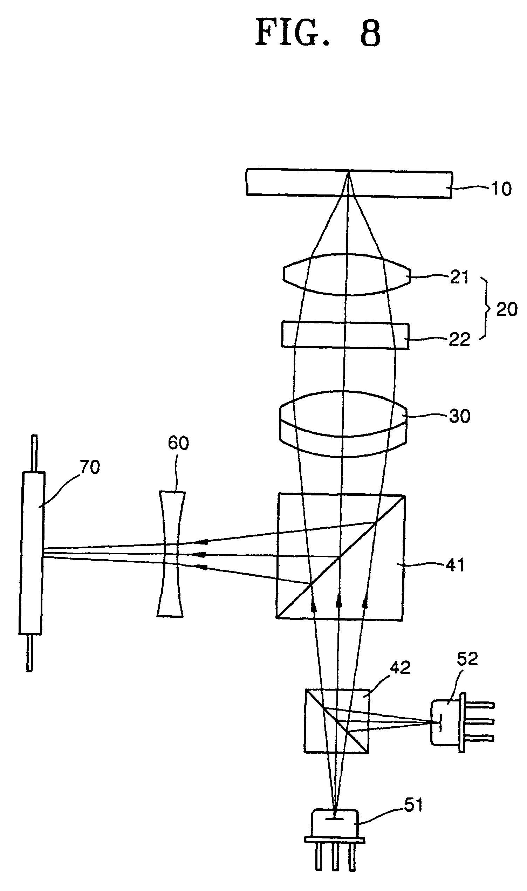

Figure 8 shows an optical pickup device according to an embodiment of the present invention having a structure compatible with two types of disks, for example, DVDs and HD-DVDs. Referring to the drawing, an objective lens 20 is disposed close to a disk 10. A collimating lens 30, a first beam splitter 41 and a second beam splitter 42 are disposed on the linear optical axis between the objective lens 30 and the first light source 51. A light receiving portion lens 60 and a photodetector 70 are disposed on the optical axis of light reflected by the first beam splitter 41. A second light source 52 for emitting laser light to the disk 10 via the second beam splitter 42 is disposed at one side of the second beam splitter 42.

The first beam splitter 41 transmits the laser light emitted from the first and second light sources 51 and 52 toward the objective lens 60 and reflects the laser light reflected by the disk 10 to proceed toward the photoreceptor 70 through the light receiving portion lens 60.

The second beam splitter 42 transmits the laser light emitted from the first light source 51 toward the first beam splitter 41 and reflects the laser light emitted from the second light source 52 toward the first beam splitter 41.

The first light source 501 oscillates laser light having a wavelength corresponding to an HD-DVD, for example, 405 nm. The second light source 502 oscillates laser light having a wavelength of 650 nm corresponding to a DVD. Thus, when reproduction and recording is performed for the HD-DVD, the laser light emitted from the first light source 501 is used while, when reproduction and recording is performed for the DVD, the laser light emitted from the second light source 502 is used.

The DVD/HD-DVD compatible optical pickup device has a characteristic feature in that the device includes two light sources and one photodetector. The optical data of the objective lens device applied to the DVD/HD-DVD compatible optical pickup device is shown below in Table 7. Table 8 shows the amount of defocus and wave front aberration according to the wavelength in use.

[Table 7]

| Focal Distance | Holographic Lens: 57.96 mm Aspherical Lens: 2.57 mm | | |
|---|---|---|---|
| Surface Number | Curvature | Thickness | Material |
| 1 | Infinity | 0.5 | BK7 |
| 2 | Infinity | 0.5 | |
| | Data of Holographic Lens<br><br>C3:-1.4493E-1      C5:-14493E-2<br><br>C10: -5.6305E-4      C12:-11209E-3<br><br>C14:-56305E-4 | | |
| 3 | 1.661 | 1.78 | BACD5 |

[Table 7]   (continued)

| Focal Distance | Holographic Lens: 57.96 mm Aspherical Lens: 2.57 mm | | |
|---|---|---|---|
| Surface Number | Curvature | Thickness | Material |
| | Conic Constant (K): -1.0<br>Aspherical Coefficient<br>    A: 0.14451E-1      B: 0.137369E-2<br>    C: 0.75073E-4      D: -0.42792E-4<br>    E:0.20446E-4      F:-0.169476E-4 | | |
| 4 | -15.050 | 1.0 | |
| | Conic Constant (K): 0<br>Aspherical Coefficient<br>    A: 0.195408E-1      B: -0.16114E-2<br>    C: 0.183311E-2      D: -0.834946E-3 | | |
| 5 | Infinity | 0.6 | Disc |
| 6 | Infinity | 0.04 | |
| 7 | Infinity | 0.0 | |

[Table 6]

| Wavelength (nm) | 650 | 407 | 405 | 403 |
|---|---|---|---|---|
| Defocus (μm) | -15.52 | 0.42 | 0.12 | -0.19 |
| Wave Surface Aberration (λ) | 0.01 | 0.006 | 0.0025 | 0.006 |

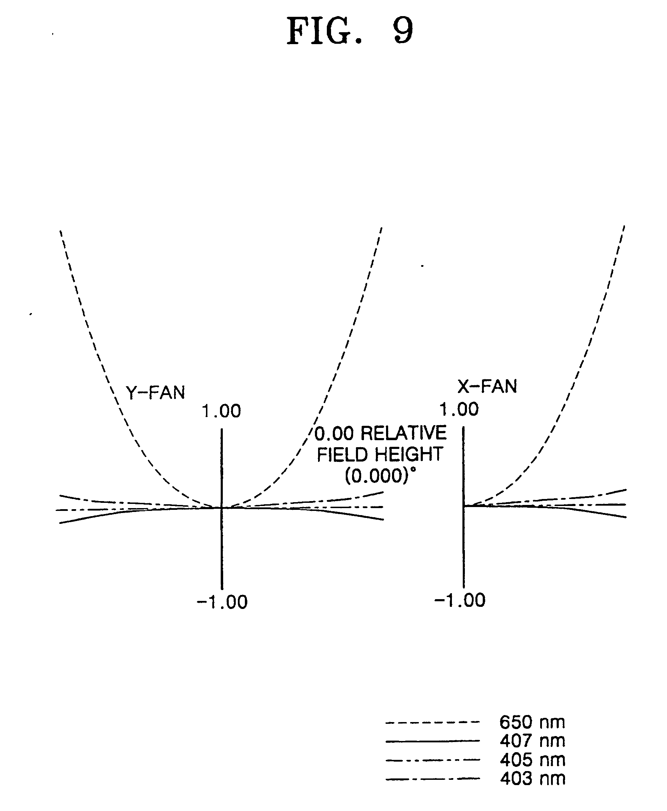

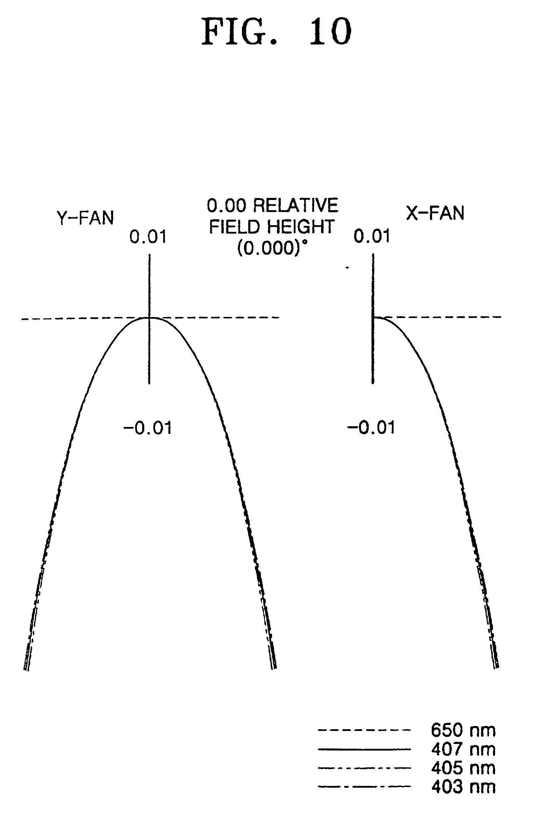

When information of a DVD is reproduced by the DVD/HD-DVD compatible optical pickup device, the distance between the aspherical lens element of the objective lens unit device and the disk is adjusted by a focus servo mechanism such that the distance is 15 μm shorter than in the case of an HD-DVD. For a change of about ±2 nm in wavelength of laser light emitted from a laser diode generated during the shift between reproduction and recording on the HD-DVD, reliable recording/reproduction is performed within the focal depth of the objective lens device without special adjustment. Figure 9 shows the property of aberration after the working distance between the objective lens device of the compatible optical pickup device according to the present invention and a disk is adjusted to be optimal for an HD-DVD. In the graph, it can be seen that the aberration of a 405 nm HD-DVD is 0.01 λ or less while the aberration of a 650 nm DVD is very high. Figure 10 shows the property of aberration after the working distance is adjusted so that the aberration of a DVD is optimal. In this case, the aberration of HD-DVD is as much as 0.1 λ or more. Thus, during use of an HD-DVD and recording/reproduction of a DVD, superior performance under 0.01 λ for each case can be obtained by adjusting the working distance.

As described above, according to the teachings of the present invention, during the shift between recoding and reproduction of a DVD or an HD-DVD, the change in wavelength due to the change in power of the laser light and aberration according to the change can be effectively corrected. Also, since the objective lens device is formed of one aspherical lens element and one holographic lens element, the material for each of the lens elements can be easily selected and also the structure of the optical pickup device adopting the objective lens device according to the present invention can be simplified.

It is noted that the present invention is not limited to the preferred embodiment described above, and it is apparent that variations and modifications by those skilled in the art can be effected within the scope of the present invention defined in the appended claims.

**Claims**

1.   An objective lens device (20) comprising:

an aspherical lens element (21) having a predetermined focal distance and a predetermined numerical aperture; and

a holographic lens (22) including a diffraction lattice installed adjacent to the aspherical lens element (21);

**characterized in that**:

a focal distance of the holographic lens (22) is longer than the focal distance of the aspherical lens element (21); and

said diffraction lattice compensates for chromatism due to changes in wavelength of a laser light having a wavelength of 670 nm or less.

2. The device as claimed in claim 1, wherein the device is arranged, in use, to face a disk and the disk is one of a disk type including a DVD and an HD-DVD.

3. An optical pickup device comprising:

a light source (50) for generating laser light which proceeds toward a disk;

an objective lens device (20) including an aspherical lens element (21) facing a disk having a predetermined focal distance and a predetermined numerical aperture, and a holographic lens (22) including a diffraction lattice installed adjacent to the aspherical lens element (21);

a beam splitter (40) provided between the light source (50) and the objective lens (20) device;

a photodetector (70) for receiving light reflected by the disk and passing through the beam splitter (40);

**characterized in that**:

a focal distance of the holographic lens (22) is longer than the focal distance of the aspherical lens element (21); and

said diffraction lattice compensates for chromatism due to changes in wavelength of a laser light having a wavelength of 670 nm or less.

4. The device as claimed in claim 3, wherein the disk is any one of a disk type including a DVD and an HD-DVD.

5. The device as claimed in claim 3, wherein the light source emits laser light having a wavelength between and including 390 nm and 420 nm.

6. An optical pickup device comprising:

first and second light sources (51, 52) for generating laser light having different wavelengths which proceed toward a disk (10) selected from two different kinds of disks;

an objective lens device (20) including an aspherical lens element (21) facing a disk (10) having a predetermined focal distance and a predetermined numerical aperture, and a holographic lens (22) including a diffraction lattice installed adjacent to the aspherical lens element (21);

a first beam splitter (41) provided between the first light source (51) and the objective lens device (20) for passing the laser light emitted from the first and second light sources (51, 52) to proceed toward the disk (10);

a second beam splitter (42) provided between the first beam splitter (41) and the first light source (51) for passing the laser light emitted from the second light source (52) to proceed toward the disk (10);

a photodetector (70) for receiving light reflected by the disk (10) and passing through the first beam splitter (41);

**characterized in that**:

a focal distance of the holographic lens (22) is longer than the focal distance of the aspherical lens element (21); and

said diffraction lattice compensates for chromatism due to changes in wavelength of a laser light having a wavelength of 670 nm or less.

**7.** The device as claimed in claim 6, wherein the different type of disks are a DVD and an HD-DVD.

**8.** The device as claimed in claim 6 or 7, wherein the first light source (51) emits laser light having a wavelength between and including 390 nm and 420 nm and the second light source (52) emits laser light having a wavelength between and including 630 nm and 670 nm.

**9.** The device as claimed in claim 8, wherein the first light source (51) emits laser light having a wavelength of 405 nm and the second light source (52) emits laser light having a wavelength of 650 nm.

**10.** The device as claimed in any of the preceding claims, wherein the aspherical lens element (21) has positive power and the holographic lens element (22) has positive or negative power.


**Patentansprüche**

**1.** Objektivlinsenvorrichtung (20), umfassend:

ein asphärisches Linsenelement (21) mit einer vorbestimmten Brennweite und einer vorbestimmten numerischen Apertur und
eine holografische Linse (22), die ein angrenzend an das asphärische Linsenelement installiertes (21) Beugungsgitter enthält,

**dadurch gekennzeichnet, dass**
eine Brennweite der holografischen Linse (22) länger als die Brennweite des asphärischen Linsenelementes (21) ist und
dass das Beugungsgitter chromatische Abweichungen auf Grund von Änderungen in der Wellenlänge eines Laserlichts mit einer Wellenlänge von 670 nm oder weniger kompensiert.

**2.** Vorrichtung nach Anspruch 1. wobei die Vorrichtung bei Verwendung angeordnet ist, um einer Platte zugewandt zu sein, und die Platte eine eines Plattentyps ist. der eine DVD und eine HD-DVD einschließt.

**3.** Optische Pickup-vorrichtung, umfassend:

eine Lichtquelle (50) zum Erzeugen von Laserlicht, das in Richtung auf eine Platte geht,
eine Objektivlinsenvorrichtung (20), die ein einer Platte zugewandtes asphärisches Linsenelement (21) mit einer vorbestimmten Brennweite und einer vorbestimmten numerischen Apertur und
eine holografische Linse (22), die ein angrenzend an das asphärische Linsenelement installiertes (21) Beugungsgitter enthält, enthält,
einen Strahlenteiler (40), der zwischen der Lichtquelle (50) und der Öbjektivlinsenvorrichtung (20) bereitgestellt ist,
einen Fotodetektor (70) zum Empfangen des von der Platte reflektierten und durch den Strahlenteiler (40) hindurchgehenden Lichts,

**dadurch gekennzeichnet, dass**
eine Brennweite der holografischen Linse (22) länger als die Brennweite des asphärischen Linsenelementes (21) ist und
dass das Beugungsgitter chromatische Abweichungen auf Grund von Änderungen in der Wellenlänge eines Laserlichts mit einer Wellenlänge von 670 nm oder weniger kompensiert.

**4.** Vorrichtung nach Anspruch 3, wobei die Platte eine eines Plattentyps ist, der eine DVD und eine HD-DVD einschließt.

**5.** Vorrichtung nach Anspruch 3, wobei die Lichtquelle Laserlicht mit einer Wellenlänge zwischen und einschließlich 390 nm und 420 nm emittiert.

**6.** Optische Pickup-Vorrichtung, umfassend:

eine erste und eine zweite Lichtquelle (51, 52) zum Erzeugen von Laserlicht mit verschiedenen Wellenlängen, das in Richtung einer aus zwei verschiedenen Plattentypen gewählten Platte (10) geht,
eine Objektivlinsenvorrichtung (20), die ein einer Platte (10) zugewandtes asphärisches Linsenelement (21) mit einer vorbestimmten Brennweite und einer vorbestimmten numerischen Apertur und eine holografische Linse (22), die ein angrenzend an das asphärische Linsenelement installiertes (21) Beugungsgitter enthält, enthält,
einen ersten Strahlenteiler (41), der zwischen der ersten Lichtquelle (51) und der Objektivlinsenvorrichtung (20) bereitgestellt ist, zum Hindurchführen des von der ersten und der zweiten Lichtquelle (51, 52) emittierten Laserlichts, um in Richtung auf die Platte (10) zu gehen,
einen zweiten Strahlenteiler (42), der zwischen dem ersten Strahlenteiler (41) und der ersten Lichtquelle (51) bereitgestellt ist, zum Hindurchführen des von der zweiten Lichtquelle (52) emittierten Laserlichts, um in Richtung auf die Platte (10) zu gehen,
einen Fotodetektor (70) zum Empfangen von der Platte (10) reflektierten und durch den ersten Strahlenteiler (41) hindurchgehenden Lichts,

**dadurch gekennzeichnet, dass**
eine Brennweite der holografischen Linse (22) länger als die Brennweite des asphärischen Linsenelementes (21) ist und
dass das Beugungsgitter chromatische Abweichungen auf Grund von Änderungen in der Wellenlänge eines Laserlichts mit einer Wellenlänge von 670 nm oder weniger kompensiert.

**7.** Vorrichtung nach Anspruch 6, wobei die verschiedenen Plattentypen eine DVD und eine HD-DVD sind.

**8.** Vorrichtung nach Anspruch 6 oder 7, wobei die erste Lichtquelle (51) Laserlicht mit einer Wellenlänge zwischen und einschließlich 390 nm und 420 nm emittiert und die zweite Lichtquelle (52) Laserlicht mit einer Wellenlänge zwischen und einschließlich 630 nm und 670 nm emittiert.

**9.** Vorrichtung nach Anspruch 8, wobei die erste Lichtquelle (51) Laserlicht mit einer Wellenlänge von 405 nm emittiert und die zweite Lichtquelle (52) Laserlicht mit einer Wellenlänge von 650 nm emittiert.

**10.** Vorrichtung nach einem der vorhergehenden Ansprüche, wobei das asphärische Linsenelement (21) eine positive Leistung hat und das holografische Linsenelement (22) eine negative Leistung hat.

**Revendications**

**1.** Dispositif d'objectif (20) comportant :

un élément de lentille asphérique (21) ayant une distance focale prédéterminée et une ouverture numérique prédéterminée, et
une lentille holographique (22) incluant un réseau de diffraction installée de manière adjacente à l'élément de lentille asphérique (21),

**caractérisé en ce que** :

une distance focale de la lentille holographique (22) est plus longue que la distance focale de l'élément de lentille asphérique (21), et
ledit réseau de diffraction compense un chromatisme dû à des changements de longueur d'onde d'une lumière laser ayant une longueur d'onde de 670 nm ou moins.

**2.** Dispositif selon la revendication 1, dans lequel le dispositif est conçu, en utilisation, pour faire face à un disque et le disque est un disque d'un type incluant un DVD et un HD-DVD.

3. Dispositif de lecture optique comportant :

une source de lumière (50) pour générer une lumière laser qui se dirige en direction d'un disque,
un dispositif d'objectif (20) incluant un élément de lentille asphérique (21) se trouvant en face d'un disque ayant une distance focale prédéterminée et une ouverture numérique prédéterminée, et
une lentille holographique (22) incluant un réseau de diffraction installé de manière adjacente à l'élément de lentille asphérique (21),
un diviseur de faisceau (40) fourni entre la source de lumière (50) et le dispositif d'objectif (20) ,
un photodétecteur (70) pour recevoir la lumière réfléchie par le disque et passant à travers le diviseur de faisceau (40),

**caractérisé en ce que** :

une distance focale de la lentille holographique (22) est plus longue que la distance focale de l'élément de lentille asphérique (21), et
ledit réseau de diffraction compense un chromatisme dû à des changements de longueur d'onde d'une lumière laser ayant une longueur d'onde de 670 nm ou moins.

4. Dispositif selon la revendication 3, dans lequel le disque est un disque d'un type quelconque incluant un DVD et un HD-DVD.

5. Dispositif selon la revendication 3, dans lequel la source de lumière émet une lumière laser ayant une longueur d'onde comprise entre 390 nm et 420 nm et incluant ces valeurs.

6. Dispositif de lecture optique comportant :

des première et seconde sources de lumière (51, 52) pour générer une lumière laser, ayant des longueurs d'onde différentes, qui se dirige en direction d'un disque (10) sélectionné parmi deux types différents de disques,
un dispositif d'objectif (20) incluant un élément de lentille asphérique (21) faisant face à un disque (10) ayant une distance focale prédéterminée et une ouverture numérique prédéterminée, et une lentille holographique (22) incluant un réseau de diffraction installée de manière adjacente à l'élément de lentille asphérique (21) ,
un premier diviseur de faisceau (41) fourni entre la première source de lumière (51) et le dispositif d'objectif (20) pour faire passer la lumière laser émise par les première et seconde sources de lumière (51, 52) pour qu'elle se dirige en direction du disque (10),
un second diviseur de faisceau (42) fourni entre le premier diviseur de faisceau (41) et la première source de lumière (51) pour faire passer la lumière laser émise depuis la seconde source de lumière (52) pour qu'elle se dirige en direction du disque (10) ;
un photodétecteur (70) pour recevoir la lumière réfléchie par le disque (10) et passant à travers le premier diviseur de faisceau (41),

**caractérisé en ce que** :

une distance focale de la lentille holographique (22) est plus longue que la distance focale de l'élément de lentille asphérique (21), et
ledit réseau de diffraction compense un chromatisme dû à des changements de longueur d'onde d'une lumière laser ayant une longueur d'onde de 670 nm ou moins.

7. Dispositif selon la revendication 6, dans lequel les différents types de disques sont un DVD et un HD-DVD.

8. Dispositif selon la revendication 6 ou 7, dans lequel la première source de lumière (51) émet une lumière laser ayant une longueur d'onde comprise entre 390 nm et 420 nm et incluant ces valeurs et, la seconde source de lumière (52) émet une lumière laser ayant une longueur d'onde comprise entre 630 nm et 670 nm et incluant ces valeurs.

9. Dispositif selon la revendication 8, dans lequel la première source de lumière (51) émet une lumière laser ayant une longueur d'onde de 405 nm et la seconde source de lumière (52) émet une lumière laser ayant une longueur d'onde de 650 nm.

**10.** Dispositif selon l'une quelconque des revendications précédentes, dans lequel l'élément de lentille asphérique (21) a une puissance positive et l'élément de lentille holographique (22) a une puissance positive ou négative.

# FIG. 1

# FIG. 2

0.83mm

# FIG. 3

TANGENTIAL     0.00 RELATIVE     SAGITTAL
        1.00    FIELD HEIGHT   1.00
              (0.000)°

       -1.00             -1.00

- - - - - -    652 nm
————————    650 nm
—·—·—·—    648 nm

# FIG. 4

TANGENTIAL     0.00 RELATIVE     SAGITTAL
        1.00    FIELD HEIGHT   1.00
              (0.000)°

       -1.00             -1.00

- - - - - -    407 nm
————————    405 nm
—·—·—·—    403 nm

# FIG. 5

0.83mm

# FIG. 6

Y-FAN    0.00 RELATIVE    X-FAN
FIELD HEIGHT
(0.000)°

0.01       0.01

-0.01       -0.01

------- 407 nm
———— 405 nm
—·—·— 403 nm

16

# FIG. 7

# FIG. 8

# FIG. 9

Y-FAN
1.00

0.00 RELATIVE
FIELD HEIGHT
(0.000)°

-1.00

X-FAN
1.00

-1.00

| | |
|---|---|
| -------- | 650 nm |
| ———— | 407 nm |
| —·—·— | 405 nm |
| —··—··— | 403 nm |

# FIG. 10

Y-FAN     0.00 RELATIVE FIELD HEIGHT (0.000)°     X-FAN

650 nm
407 nm
405 nm
403 nm